# EUROPÄISCHE PATENTANMELDUNG

(11) **EP 4 656 902 A1**
(43) Veröffentlichungstag der Anmeldung: **03.12.2025**
(21) Anmeldenummer: 25178681.0
(22) Anmeldetag: 26.05.2025
(51) Int. Cl.: F16G 3/10, F16G 1/28, B29C 65/48, B29C 65/00, B65G 15/00, F16G 3/02, F16G 3/08

(54) **ENDLOSGURT**

(30) Priorität: 29.05.2024 US 202463652875 P
(71) Anmelder: ContiTech Deutschland GmbH, 30175 Hannover (DE)
(72) Erfinder: Bäuerle-Müller, Christel, 30175 Hannover (DE); Seibold, Sebastian, 30175 Hannover (DE); Podias, Stavros, 30175 Hannover (DE); Dr. Minkin, Andrey, 30175 Hannover (DE); Gries, Stephan, 30175 Hannover (DE); Bachir, Mohamad, Fairlawn, 44333 (US); Brown, Donald, Fairlawn, 44333 (US)
(74) Vertreter: Preusser, Andrea

(57) **Zusammenfassung**

Die Erfindung betrifft einen Endlosgurt (10) mit wenigstens zwei Deckplatten (11) aus thermoplastischem Elastomer und wenigstens ein zwischen den beiden Deckplatten (11) angeordnetes Gewebezugträger (12), das ein oder mehrere Polyolefingarne umfasst, wobei der Endlosgurt (10) wenigstens zwei Längsenden (13) aufweist, die an einer Verbindungsstelle (14) durch eine permanente (nicht-lösbare) Verbindung wie z.B. Überlappung- oder Hakenverbindung (15) und/oder durch wenigstens eine an den Längsenden (13) mechanische (lösbare) Verbindungseinrichtung (16) wie z.B. Haken- oder Schraubverbindung miteinander verbunden sind, wobei die Verbindungsstelle (14) wenigstens ein Schmelzklebstoffmaterial basierend thermoplastischem Elastomer und/oder Einkomponenten-Klebstoffmaterial basierend auf Polyurethan aufweist, das die nicht-lösbare Verbindung (15) der beiden Längsenden (13) verstärkt und/oder die mechanische Verbindungseinrichtung (16) zusätzlich mit den Längsenden (13) stoffschlüssig verbindet.

## Beschreibung

Die Erfindung betrifft einen Endlosgurt zur Verwendung als Förderband und/oder als Riemen zur Kraftübertragung.

Aus dem Stand der Technik sind eine Vielzahl von Gurten, Riemen oder Bänder bekannt, die bspw. ein Zugträger, wie ein Gewebe oder Textilseile oder Garne enthalten, und in der Regel auf einer Elastomer- oder thermoplastischen Matrix basieren. Eine neuere Entwicklung sind Gurte, Riemen oder Bänder mit einem Zugträger aus Polyolefinen auf der Grundlage einer thermoplastischen Elastomermatrix. Zur Herstellung von Endlosgurten werden üblicherweise zwei offene Längsenden der Gurte miteinander verbunden.

Aus dem Stand der Technik sind eine Vielzahl von Verfahren bekannt, um die Längsenden von Gurten mit Elastomerdeckplatten miteinander zu verbinden. Bspw. kann dies mittels Vulkanisation, mittels mechanischer Verschlüsse bzw. mittels verschiedener Spleißverbindungen erfolgen.

Thermoplastische Gurte, wie PVC-Gurte ohne Zugträger oder mit thermoplastischen Elastomeren (TPE) verstärkte Gurte, wie TPU-Gurte, haben in der Regel eine geringere Zugfestigkeit, und für die Verbindung solcher Gurte werden unterschiedliche Verfahren angewandt. Eine Vulkanisierung, wie sie für Elastomerbänder verwendet wird, ist für thermoplastische Bänder oder thermoplastische Elastomerbänder nicht möglich. Für thermoplastische Gurte oder thermoplastische Elastomerbänder werden häufig mechanische Verbindungselemente verwendet. Alternativ wird das thermoplastische Schweißen bei sehr hohen Temperaturen eingesetzt.

Eine relativ neue Entwicklung sind TPE-Gurte, die ein Polyolefin-Gewebe als ein Zugträger enthalten, das die üblicherweise verwendeten Gewebe-Zugträger aus Polyester, Polyamid, Aramid oder ihrer Kombination von Gurte ersetzen kann.

Solche TPE-Gurte machen eine Vulkanisation überflüssig und ermöglichen ein einfaches Recyclingkonzept. Ein besonderer Vorteil ist, dass solche TPE-Gurte mit Polyolefingewebezugträger im Vergleich zu herkömmlichen Gurten ein wesentlich einfacheres Recycling ermöglichen. Ein Grund für diese verbesserte Recyclingeigenschaft ist der niedrige Schmelzpunkt des Polyolefingewebezugträgers.

Andererseits ist das Verbinden von TPE-Gurten mit Polyolefin-Gewebezugträger zur Herstellung von Endlosgurten im Vergleich zu herkömmlichen Gurten mit Zugtägern aus Polyester, Polyamid, Aramid etc. erschwert. Bei der Verbindung ist eine Vulkanisierung nicht möglich, da TPE nicht vernetzt. Darüber hinaus ist ein niedriger Schmelzpunkt des Polyethylens zwar vorteilhaft für das Recycling des Gurtes, hat aber den Nachteil, dass die Zugfestigkeit des Polyethylens bei höheren Temperaturen durch Rekristallisation oder Schmelzen deutlich abnimmt und auch nach dem Abkühlen oder nach der Wiederverfestigung niedrig bleibt.

WO 2021/188760 A1 betrifft ein Verfahren zur Herstellung eines verstärkten, lebensmittelechten Gurtes, der einen thermoplastischen, elastomeren Bandkörper umfasst, in den eine Vielzahl von thermoplastischen, synthetischen Filamenten eingebettet ist. In er WO 2021/188760 A1 wird die Herstellung eines Endlosgurtes beschrieben, bei dem die Längsenden des Gurtes miteinander verschmolzen werden und die Filamente während des Verschmelzungsschritts geschmolzen werden.

Wie bereits erwähnt, wird die Zugfestigkeit drastisch reduziert, wenn die Polyolefinzugträger relativ hohen Temperaturen ausgesetzt wird, die sogar zum Schmelzen des Gewebezugträgers führen können. Eine niedrige Zugfestigkeit von Endlosgurten mag für einige technische Anwendungen akzeptabel sein, schränkt aber die möglichen technischen Anwendungen drastisch ein.

Die aus dem Stand der Technik bekannten Gurte sind somit für die Anwendung, bspw. in der Mittel- und Schwerindustrie oder im Bergbau, bei denen hohe Nennzugfestigkeiten bzw. Nennbruchfestigkeiten, Aufschlag und Schlitzfestigkeiten erforderlich sind, ungeeignet. Solche Gurte bzw. Endlosgurte kommen bspw. für den Transport von Gütern und Schüttgütern, wie zum Beispiel Kies, Sand, Erzen, wie Kupfer oder Eisen, Kohle, Abraum oder dergleichen zum Einsatz, bei dem hohe Fördergeschwindigkeiten und hohe Förderkapazitäten erreicht werden.

Der Erfindung liegt die Aufgabe zu Grunde, einen Endlosgurt zur Verfügung zu stellen, der eine erhöhte Zugfestigkeit (>315 N/mm) aufweist, vielseitig einsetzbar ist und eine einfach herzustellende Verbindung von dessen Längsenden umfasst.

Erfindungsgemäß wird die vorstehend genannte Aufgabe im Hinblick auf den Endlosgurt durch den Gegenstand des Anspruchs 1 gelöst.

Konkret wird die Aufgabe durch einen Endlosgurt mit wenigstens zwei Deckschichten aus thermoplastischem Elastomer und wenigstens ein zwischen den beiden Deckschichten angeordnetes Verstärkungsgewebe (Zugträger), das ein oder mehrere Polyolefingarne umfasst, wobei der Endlosgurt wenigstens zwei Längsenden aufweist, die an einer Verbindungsstelle durch eine permanente bzw. nicht lösbare Verbindung, wie z.B. Überlappung- oder Fingerverbindung und/oder durch wenigstens eine an den Längsenden mechanische bzw. lösbare Verbindungseinrichtung miteinander verbunden sind, wobei die Verbindungsstelle wenigstens ein Schmelzklebstoffmaterial aus thermoplastischem Elastomer und/oder Einkomponenten-Klebstoffmaterial aus Polyurethan aufweist, das die nicht lösbare Verbindung der beiden Längsenden verstärkt und/oder die mechanische Verbindungseinrichtung zusätzlich mit den Längsenden stoffschlüssig verbindet.

Das Schmelzklebstoffmaterial aus thermoplastischem Elastomer (TPE) wird im Folgenden als TPE-Schmelzklebstoffmaterial und das Einkomponenten (1K) - Klebstoffmaterial aus Polyurethan (PU) als 1K-PU-Klebstoffmaterial bezeichnet.

Ein wesentlicher Gedanke der Erfindung ist es, die zwei Längsenden des Endlosgurtes durch Spleißen bzw. eine mechanische Verbindungseinrichtung miteinander derart zu verbinden, dass der Endlosgurt gebildet ist. Zusätzlich umfasst die Verbindungsstelle der beiden Längsenden das TPE-Schmelzklebstoffmaterial bzw. das 1K-PU-Klebstoffmaterial, um die nicht lösbare Verbindung der beiden Längsenden durch zusätzliches Verkleben zu verstärken bzw. die mechanische Verbindungseinrichtung neben der Verankerung an den Längsenden zusätzlich zu verkleben. Die Verbindungsstelle des erfindungsgemäßen Endlosgurtes weist somit einen besonders robusten und stabilen Aufbau sowie einen hohen statischen und dynamischen Verbindungswirkungsgrad auf.

Die zusätzliche Verklebung mit dem TPE-Schmelzklebstoffmaterial bzw. dem 1K-PU-Klebstoffmaterial dient zur Verstärkung der Verbindungsstelle der beiden Längsenden, sodass eine erhöhte Zugfestigkeit des Endlosgurtes erreicht wird. Der Endlosgurt kann eine Zugfestigkeit von 400 N/mm bis 10.000 N/mm aufweisen. Dies ermöglicht den vielseitigen Einsatz des Endlosgurtes, insbesondere in Bereichen, in denen eben eine solch hohe Zugfestigkeit gefordert ist. Der erfindungsgemäße Endlosgurt ist dazu geeignet, in der Mittel- und Schwerindustrie eingesetzt zur werden, in der hohe Fördergeschwindigkeiten und hohe Förderkapazitäten erforderlich sind. Beispielsweise kann der Endlosgurt für den Transport von Gütern und Schüttgütern, wie zum Beispiel Kies, Sand, Erzen, wie Kupfer oder Eisen, Kohle, Abraum oder dergleichen zum Einsatz kommen.

Im Falle der nicht lösbaren Verbindung ist es möglich, dass das TPE-Schmelzklebstoffmaterial bzw. das 1K-PU-Klebstoffmaterial nicht nur eine Verstärkungsfunktion übernimmt, sondern auch die eigentliche permanente Verbindung mitbildet. Mit anderen Worten kann das TPE-Schmelzklebstoffmaterial bzw. das 1K-PU-Klebstoffmaterial zur Bildung der nicht lösbaren Verbindung beitragen. Dies kann bspw. bei einer Überlappungsverbindung der Falls sein. Hauptfunktion des TPE-Schmelzklebstoffmaterials bzw. des 1K-PU-Klebstoffmaterial ist aber, die Verstärkung der nicht lösbaren Verbindung.

Im Falle der mechanischen Verbindungseinrichtung bildet das TPE-Schmelzklebstoffmaterial bzw. das 1K-PU-Klebstoffmaterial eine zusätzliche Verbindung der Verbindungseinrichtung mit dem jeweiligen Längsende des Endlosgurtes. Die Verbindung der Verbindungseinrichtung mit den Längsenden ist somit durch zusätzliches Verkleben verstärkt.

Der Einsatz des TPE-Schmelzklebstoffmaterials bzw. des 1K-PU-Klebstoffmaterials erhöht somit die Stabilität und Robustheit der Verbindungsstelle, die dadurch besonders zugfest ist, ohne, dass die Herstellung der Verbindung der Längsenden erschwert wird. Vielmehr stellt der Einsatz des TPE-Schmelzklebstoffmaterials bzw. des 1K-PU-Klebstoffmaterials im Lichte der erhöhten Zugfestigkeit eine vereinfachte Herstellung dar.

Das Gewebezugträger aus einem oder mehreren Polyolefingarnen kann ein marktübliches Gewebezugträger sein. Das Verstärkungsgewebe kann aus einer oder mehreren Lagen aufgebaut sein. Vorzugsweise ist das Gewebezugträger einlagig.

Das thermoplastische Polymer der ersten (tragseitigen) und zweiten (laufseitigen) Deckplatte wird vorzugsweise aus thermoplastischem Polyolefin (TPO), thermoplastischem Vulkanisat (TPV), vorzugsweise nicht fluorpolymerem TPV, oder thermoplastischem Polyurethan (TPU) ausgewählt, wobei TPU bevorzugt wird. Dementsprechend werden die erste und zweite TPE-Deckplatte vorzugsweise aus TPO-Deckplatten, TPV-Deckplatten und TPU-Deckplatten ausgewählt.

Das thermoplastische Elastomer der Deckplatten ist vorzugsweise thermoplastisches Polyurethan (TPU). Geeignete thermoplastische Elastomere sind z. B. TPO (thermoplastisches Polyolefin) oder TPV (thermoplastisches Vulkanisat = vernetztes "thermoplastisches Polyolefin"). Ein besonders geeignetes Polypropylen, das in solchen Mischungen eingesetzt werden kann, ist z.B. ein Polypropylen mit einer Dichte von 0,90 bis 0,91 g/cm³. Andere geeignete thermoplastische Elastomere sind Ethylen-Acrylat-Kautschuk (AEM) und Acrylat-Kautschuk (ACM), vorzugsweise in Kombination mit Polyamid.

Die erste und die zweite Deckplatte aus thermoplastischem Elastomer können jeweils eine Dicke im Bereich von 0,5 bis 30 mm, vorzugsweise von 1 bis 25 mm, besonders bevorzugt von 1 bis 10 mm aufweisen. Die Dicke der ersten und der zweiten Deckplatte aus thermoplastischem Elastomer kann gleich oder unterschiedlich sein.

Bei einer besonders bevorzugten Ausführungsform ist das Schmelzklebstoffmaterial ein thermoplastischer Polyurethan (TPU) Schmelzklebstoff. Der thermoplastische Polyurethan Schmelzklebstoff kann als TPU-Schmelzklebstoff(material) bezeichnet werden. Ein solcher Schmelzklebstoff verstärkt die nicht lösbare Verbindung besonders ist nicht vernetzt und somit 100%-recyclebar. Ferner ist erhöht ein solcher Schmelzklebstoff die Sitzfestigkeit der Verbindungseinrichtung an den Längsenden. In Summe wird dadurch eine erhöhte Zugfestigkeit der Verbindungsstelle erreicht.

Bei einer bevorzugten Ausführungsform weist der Gewebezugträger an den beiden Längsenden jeweils eine Zickzackkontur mit Fingerelementen auf, die an der Verbindungsstelle zur Bildung der nicht lösbaren Fingerverbindung ineinander eingreifen, wobei die Zickzackkonturen in Umfangsrichtung des Endlosgurts zumindest mit dem Schmelzklebstoffmaterial, insbesondere TPE-Schmelzklebstoffmaterial, ummantelt sind. Bevorzugt sind die ineinandergreifenden Fingerelemente in Umfangsrichtung mit dem Schmelzklebstoffmaterial vollständig ummantelt. Die Fingerelemente greifen vorzugsweise derart ineinander, dass diese in einer gemeinsamen Ebene, insbesondere der Ebene des Gewebezugträgers, liegen. Zur Bildung der Fingerverbindung sind die Fingerelemente der Zickzackkonturen der beiden gegenüberliegenden Längsenden des Endlosgurtes miteinander verschränkt und umfänglich durch das Schmelzklebstoffmaterial, insbesondere TPE-Schmelzklebstoffmaterial, verklebt. Hier ist von Vorteil, dass die Fingerverbindung des Gewebezugträgers durch den zusätzlichen Schmelzklebstoffauftrag miteinander verstärkt ist. Dadurch ist statische und dynamische Verbindungswirkungsgrad und somit die Zugfestigkeit der Verbindungsstelle der Längsenden des Gurtes erheblich erhöht.

Im Rahmen der Erfindung verläuft die Umfangsrichtung des Endlosgurtes quer zur Längsrichtung des Endlosgurtes.

Vorzugsweise ist das Schmelzklebstoffmaterial als Klebstoffband auf die Zickzackkonturen des Gewebezugträgers aufgebracht ist, wobei die Enden des Klebstoffbandes sich in Umfangsrichtung des Endlosgurts, insbesondere bis zu 50 mm, überlappen. Mit anderen Worten ist das Schmelzklebstoffmaterial, insbesondere TPE-Schmelzklebstoffmaterial, als Klebstoffstreifen vorgesehen, der die ineinandergreifenden Fingerelemente der Zickzackkonturen der Längsenden umfänglich fixiert und verklebt. Das Schmelzklebstoffmaterial kann auch eine Klebstofffolie sein. Das Schmelzklebstoffmaterial steht vorzugsweise mit den Fingerelementen der Zickzackkonturen direkt in Kontakt. Dadurch ist die Fingerverbindung der Längsende verstärkt. Ferner erfolgt durch den überlappenden Endabschnitt des Klebstoffstreifens ein Verkleben der Endabschnitte, was die Festigkeit der Verbindung erhöht.

Es ist von Vorteil, wenn das Schmelzklebstoffmaterial die Zickzackkonturen des Gewebezugträgers in Längsrichtung des Endlosgurts zumindest abschnittsweise, insbesondere vorzugsweise vollständig, bedeckt. Mit anderen Worten kann das Schmelzklebstoffmaterial, insbesondere das Klebstoffband, so breit im Bereich der Zickzackkonturen der beiden Längsenden aufgebracht sein, dass die ineinandergreifenden Fingerelemente in Längsrichtung abgedeckt bzw. überdeckt sind. Somit besteht nicht nur in Umfangsrichtung eine die Fingerverbindung verstärkende Klebeverbindung, sondern auch in Längsrichtung. Die erhöht weiter die Zugfestigkeit der Verbindungsstelle.

Die Festigkeit der Fingerverbindung ist erhöht, wenn wenigstens ein weiteres Klebstoffmaterial zwischen den Fingerelementen der Zickzackkonturen des Gewebezugträgers eingebracht ist, um Fingerelemente der Zickzackkonturen miteinander zu verkleben. Das weitere Klebstoffmaterial kann ein thermoplastisches Elastomer umfassen und/oder ein Einkomponenten-Klebstoffmaterial. Das weitere Klebstoffmaterial kann als Montagekleber bei der Herstellung der Fingerverbindung dienen oder eine zusätzliche Verstärkung der Fingerverbindung bewirken.

Bei einer Ausführungsform ist die zur Bildung der Fingerverbindung freigeschnittene Verbindungsstelle durch wenigstens ein Abdeckelement aus thermoplastischem Elastomer, insbesondere aus thermoplastischem Polyurethan (TPU), abgedeckt und durch das Schmelzklebstoffmaterial mit dem Gewebezugträger stoffschlüssig verbunden ist. Zur Herstellung der Fingerverbindung ist es erforderlich, die erste und/oder zweite Deckplatte an den Längsenden, insbesondere im Bereich der zu erstellenden Zickzackkonturen des Gewebezugträgers (Verbindungsstelle), freizulegen. Anschließend werden die Fingerelemente durch Schneiden oder Stanzen des Gewebezugträgers erstellt und miteinander verschränkt. Dann wird das Schmelzklebstoffmaterial aufgebracht. Nach der Herstellung der Fingerverbindung wird die freigelegte Verbindungsstelle durch das Abdeckelement verschlossen und durch das Schmelzklebstoffmaterial, insbesondere -band, mit dem Gewebezugträger verklebt.

Es kann wenigstens ein weiteres Klebstoffband in Längsrichtung an den Zickzackkonturen beidseitig angeordnet sein, um das/ein Abdeckelement mit dem Gewebezugträger zu verkleben. Dies verbesserte die Klebeverbindung zwischen dem Abdeckelement und dem Gewebezugträger.

Vorzugsweise schließt das Abdeckelement mit der ersten bzw. der zweiten Deckplatte im Wesentlichen außenbündig ab. Eine im Rahmen von geringen Toleranzen auftretende Verdickung des Endlosgurtes im Bereich der Verbindungsstelle kann auftreten.

Bei einer bevorzugten Ausführungsform umfasst die Verbindungsstelle wenigstens einen Überlappungsabschnitt, in dem beide Längsenden in Längsrichtung des Endlosgurts überlappen, wobei in dem Überlappungsabschnitt das Schmelzklebstoffmaterial und/oder das Einkomponenten-Klebstoffmaterial zwischen den einander gegenüberliegenden Deckplatten angeordnet ist und diese stoffschlüssig verbindet. Die beiden Längsenden des Endlosgurts überlappen vorzugsweise über die gesamte Breite des Endlosgurtes. Eine solche Verbindung der Längsenden wird als Überlappungsverbindung bezeichnet. Der Einsatz des TPE-Schmelzklebstoffmaterials bzw. des 1K-Klebstoffmaterials verstärkt die Überlappungsspließverbindung der TPE-Gurte mit Polyolefin-Gewebezugträger, insbesondere im Vergleich zum Stand der Technik, wie bspw. in der DIN 22102-3 beschrieben, bei dem ein Kautschukklebstoff verwendet wird. Diese Ausführungsform hat den Vorteil, dass die Verbindung der Längsenden des Gurtes kostengünstig und mit geringem Zeit- und Energieaufwand herstellbar ist. Bspw. kann ein Endlosgurt mit einer solch hergestellten Verbindungsstelle eine maximale Zugfestigkeit von bis zu 500 N/mm aufweisen.

Bevorzugt umfassen die Längsenden im Überlappungsabschnitt jeweils eine Materialabtragung an den einander gegenüberliegenden Deckplatten, in die das Schmelzklebstoffmaterial und/oder das Einkomponenten-Klebstoffmaterial eingebettet ist. Hierdurch wird erreicht, dass eine Gesamtdicke des Endlosgurtes im Bereich der Verbindungsstelle zumindest nicht so stark erhöht ist, dass die Verbindungsstelle im Gebrauch des Gurtes, bspw. beim Laufen auf Führungsmitteln, nicht negativ beeinflusst wird. Mit anderen Worten wird hierdurch versucht, die Gesamtdicke der Verbindungsstelle so gering wie möglich zu halten. Ferner resultiert daraus eine erhöhte Zugfestigkeit der Verbindung, da der Zugkraftverlauf durch die Verbindungsstelle so umlenkungsfrei wie möglich gestaltet ist.

Bei einer bevorzugten Ausführungsform umfasst die mechanische Verbindungseinrichtung je Längsende des Endlosgurts wenigstens ein Kopplungselement, wobei die Kopplungselemente mechanisch miteinander verbunden sind, wobei das Schmelzklebstoffmaterial und/oder Einkomponenten-Klebstoffmaterial die Kopplungselemente mit der ersten und/oder zweiten Deckplatte zusätzlich zur Verankerung stoffschlüssig verbindet. Mit anderen Worten ist je Längsende des Endlosgurtes wenigstens ein Kopplungselement an dem Längsende mechanisch und zusätzlich durch das TPE-Schmelzklebstoffmaterial und/oder 1K-PU-Klebstoffmaterial mit den Deckplatten verklebt. Es ist von Vorteil, wenn das TPE-Schmelzklebstoffmaterial und/oder 1K-PU-Klebstoffmaterial zwischen einer Kontaktfläche der Kopplungselemente und der zugewandten Deckplatte flächig angeordnet ist. Bei dieser Ausführungsform ist von Vorteil, dass das durch Verstärkung der Verankerung der Kopplungselemente eine besonders feste Anordnung der Kopplungselemente an den Längsenden resultiert, was zu einer erhöhten Zugfestigkeit der Verbindungsstelle des Endlosgurtes führt.

Die Verankerung kann durch Befestigungsmittel, bspw. aus Metall, erfolgen. Die Befestigungsmittel durchdringen die Deckplatten und der Gewebezugträger, insbesondere quer zur Längsrichtung, d.h. in einer Dickenrichtung des Endlosgurtes, und verankern das Kopplungselement so an dem Längsende, insbesondere der Stirnseite des Längsendes. Um die beiden gegenüberliegenden Längsenden des Gurtes miteinander zu verbinden, sind die beiden gegenüberliegenden Kopplungselemente an den Längsenden mechanisch verbunden. Dazu können diese formschlüssig, durch Ineinandereingreifen, verbunden sein. Zusätzlich oder alternativ kann die Verbindungseinrichtung wenigstens ein Arretierelement umfassen, das die beiden Kopplungselemente miteinander arretiert.

Als Kopplungselemente der Verbindungseinrichtung können Haken, insbesondere Drahthaken oder Flachhaken, Spiralverbinder und/oder Plattenverbinder oder dergleichen zum Einsatz kommen.

Besonders von Vorteil ist, wenn das TPE-Schmelzklebstoffmaterial und/oder 1K-PU-Klebstoffmaterial im Bereich der Verankerung, insbesondere der den Gurt durchdringenden Befestigungsmittel, angeordnet ist.

Vorzugsweise umfasst die mechanische Verbindungseinrichtung wenigstens zwei Befestigungselemente, insbesondere Matten, umfasst, die an den Deckplatten einander gegenüber angeordnet und miteinander derart vielfach verschraubt sind, dass die Längsenden zwischen den Befestigungselementen fixiert sind.

Das Schmelzklebstoffmaterial und/oder Einkomponenten-Klebstoffmaterial ist vorzugsweise zwischen den Befestigungselementen und den Deckplatten angeordnet ist und verbindet diese miteinander stoffschlüssig. Besonders von Vorteil ist, wenn das TPE-Schmelzklebstoffmaterial und/oder 1K-PU-Klebstoffmaterial im Bereich der Verschraubungen, insbesondere von den Gurt durchdringenden Schrauben, angeordnet ist. Diese Art der Verbindung ist schnell und einfach herstellbar. Des Weiteren ist eine solche Verbindung der Längsenden kostengünstig.

Bevorzugt umfasst der Gewebezugträger eine Gurtkarkasse mit einer Vielzahl von Garnzwirnen, die vorzugsweise in Längsrichtung des Endlosgurts verlaufen. Beispielsweise können die Garnzwirne nach dem Kabelzwirnverfahren gebildet sein. Besonders von Vorteil ist, wenn die Garnzwirne jeweils aus einer Vielzahl von miteinander verzwirnten Polyolefingarnen bestehen. Die Polyolefingarne können aus einem einzigen Garn oder aus einer Vielzahl von Einzelfäden bestehen, die gezwirnt und miteinander verzwirnt werden. Die Polyolefingarne können aus jedem für die Herstellung von Fasern und/oder Garnen geeigneten Polyolefin hergestellt werden. Das eine oder die mehreren Polyolefingarne werden vorzugsweise aus Polyethylengarnen, vorzugsweise Garnen aus Polyethylen mit ultrahohem Molekulargewicht (UHMWPE), Polypropylengarnen und Kombinationen davon ausgewählt.

Das Polyethylen in den Polyethylengarnen ist vorzugsweise ein Polyethylen mit einem Molekulargewicht von mindestens 1.000.000 g/mol und noch bevorzugter mit einem Molekulargewicht Mw von 2.000.000 bis 6.000.000 g/mol. Polyethylen mit einem solchen Molekulargewicht wird allgemein als ultrahochmolekulares Polyethylen (UHMWPE) bezeichnet.

UHMWPE-Garne sind besonders vorteilhaft, da sie bei einer Prüfung nach ISO 2062 eine typische hohe Zugfestigkeit von z. B. 528 N bis 636 N pro Einzelgarn (bei einer linearen Dichte von 1760 dtex) aufweisen können. Dementsprechend werden UHMWPE-Garne vorzugsweise als Garn in Längsrichtung (oder Kettrichtung) des Gurtes verwendet.

Der Endlosgurt ist vorzugsweise ein Förderband, kann aber alternativ als Zahnriemen oder Antriebsriemen zur Kraftübertragung eingesetzt werden.

Die Erfindung wird nachstehend mit weiteren Einzelheiten unter Bezug auf die beigefügten Zeichnungen näher erläutert. Die dargestellten Ausführungsformen stellen Beispiele dar, wie der erfindungsgemäße Endlosgurt ausgestaltet sein kann.

In diesen zeigen,
- Fig. 1: eine schematische Darstellung einer nicht lösbaren Fingerverbindung einer Verbindungsstelle zweier Längsenden eines Endlosgurtes nach einem erfindungsgemäßen Ausführungsbeispiel;
- Fig. 2: eine Explosionsdarstellung der Verbindungsstelle des Endlosgurtes nach Fig. 1, wobei die jeweiligen Komponenten bzw. Klebstoffmaterialen von dem Gewebezugträger abgehoben sind;
- Fig. 3: einen Querschnitt durch die Verbindungsstelle des Endlosgurts nach Fig. 1;
- Fig. 4: eine schematische Darstellung eines Längsschnitts durch eine nicht lösbare Überlappungsverbindung einer Verbindungsstelle zweier Längsenden eines Endlosgurtes nach einem weiteren erfindungsgemäßen Ausführungsbeispiel;
- Fig. 5: einen Querschnitt durch ein Kopplungselement einer mechanischen Hakenverbindungseinrichtung zur Verbindung zweier Längsenden eines Endlosgurtes nach einem weiteren erfindungsgemäßen Ausführungsbeispiel;
- Fig. 6: einen Längsschnitt durch eine Verbindungsstelle des Endlosgurtes nach Fig. 5;
- Fig. 7: eine perspektivische Ansicht einer mechanischen Schraubverbindungseinrichtung zur Verbindung zweier Längsenden eines Endlosgurtes nach einem weiteren erfindungsgemäßen Ausführungsbeispiel, wobei die beiden Befestigungselemente der Verbindungseinrichtung aufgeklappt sind.

In der nachfolgenden Beschreibung werden für gleiche oder gleichwirkende Teile dieselben Bezugsziffern verwendet.

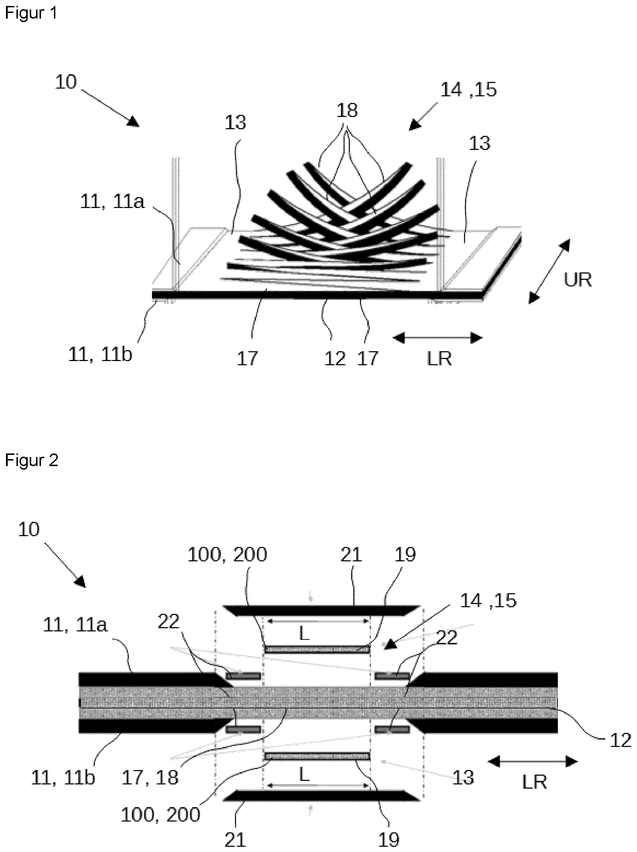

In den Fig. 1 bis 7 sind unterschiedliche Ausführungsbeispiele eines erfindungsgemäßen Endlosgurtes 10 gezeigt. Die Endlosgurte 10 weisen mit 400 N/mm bis 10.000 N/mm erhöhte Zugfestigkeitswerte auf, welche auf den nachfolgend beschriebenen, verstärkten Aufbau der Endlosgurte 1 zurückzuführen ist. Die Endlosgurte 10 sind daher vielseitigen einsetzbar, insbesondere in Bereichen, in denen eine hohe Nennzugfestigkeit gefordert ist. Die Endlosgurte 10 sind dazu geeignet, in der Mittel- und Schwerindustrie eingesetzt zur werden, in der hohe Fördergeschwindigkeiten und hohe Förderkapazitäten erforderlich sind. Beispielsweise können die Endlosgurte 10 für den Transport von Gütern und Schüttgütern, wie zum Beispiel Kies, Sand, Erzen, wie Kupfer oder Eisen, Kohle, Abraum oder dergleichen zum Einsatz kommen. Allerdings sind alternativ auch andere Anwendungen der Endlosgurte 10 möglich, nämlich zur Kraftübertragung als Zahnriemen, Antriebsriemen oder dergleichen. Weitere nicht genannte Anwendungsgebiete sind möglich.

Nachfolgend wird der grundlegende Aufbau des Endlosgurtes 10 beschrieben, der auf alle Ausführungsbeispiele gemäß Fig. 1 bis 7 zutrifft. Die Ausführungsbeispiele unterscheiden sich in der Ausgestaltung der Verbindungsstellen 14, in denen zwei Längsenden 13 des Endlosgurtes 10 miteinander verbunden sind.

Der jeweilige Endlosgurt 10 umfasst zwei Deckplatten 11 aus thermoplastischem Elastomer (TPE) und ein zwischen den beiden Deckplatten 11 angeordnetes Gewebezugträger 12. Wie in Fig. 2 erkennbar ist, weist der Endlosgurt 10 eine erste Deckplatte 11a und eine zweite Deckplatte 11b auf, die einander gegenüber angeordnet sind, wobei das Gewebezugträger 12 dazwischenliegt. Die erste Deckplatte 11a bildet eine Tragseite und die zweite Deckplatte 11b eine Laufseite.

Die beiden Deckplatten 11 sind jeweils als Deckplatten ausgebildet, welche das Gewebezugträger abdecken.

Das thermoplastische Polymer der Deckplatten 11 wird vorzugsweise aus thermoplastischem Polyolefin (TPO), thermoplastischem Vulkanisat (TPV), vorzugsweise nicht fluorpolymerem TPV, oder thermoplastischem Polyurethan (TPU) ausgewählt, wobei TPU bevorzugt wird. Dementsprechend werden die erste und zweite TPE-Deckplatte 11 vorzugsweise aus TPO-Deckplatten 11, TPV-Deckplatten 11 und TPU-Deckplatten 11 ausgewählt.

Das thermoplastische Elastomer (TPE) der Deckplatten 11 ist vorzugsweise thermoplastisches Polyurethan (TPU). Geeignete thermoplastische Elastomere sind z. B. auch EPDM (Ethylen-Propylen-Dien-Kautschuk) oder Mischungen davon mit Polyolefinen, vorzugsweise in Form von Polypropylen. Solche Mischungen können als TPO (thermoplastisches Polyolefin) oder TPV (thermoplastisches Vulkanisat = vernetztes "thermoplastisches Polyolefin") eingesetzt werden. Ein besonders geeignetes Polypropylen, das in solchen Mischungen eingesetzt werden kann, ist z.B. ein Polypropylen mit einer Dichte von 0,90 bis 0,91 g/cm3. Andere geeignete thermoplastische Elastomere sind Ethylen-Acrylat-Kautschuk (AEM) und Acrylat-Kautschuk (ACM), vorzugsweise in Kombination mit Polyamid.

Das zwischen den Deckplatten 11 angeordnete Gewebezugträger 12 weist ein oder mehrere Polyolefingarne auf. Das Gewebezugträger 12 kann aus einer oder mehreren Lagen aufgebaut sein. Vorzugsweise ist das Gewebezugträger 12 einlagig. Das Gewebezugträger 12 weist eine Gurtkarkasse mit einer Vielzahl von Garnzwirnen, die in Längsrichtung LR des Endlosgurts 10 verlaufen. Die Garnzwirne sind jeweils aus einer Vielzahl von miteinander verzwirnten Polyolefingarnen gebildet. Die Polyolefingarne können aus einem einzigen Garn oder aus einer Vielzahl von Einzelfäden bestehen, die gezwirnt und miteinander verzwirnt werden. Die Polyolefingarne können aus jedem für die Herstellung von Fasern und/oder Garnen geeigneten Polyolefin hergestellt werden. Das eine oder die mehreren Polyolefingarne werden vorzugsweise aus Polyethylengarnen, vorzugsweise Garnen aus Polyethylen mit ultrahohem Molekulargewicht (UHMWPE), Polypropylengarnen und Kombinationen davon ausgewählt.

Das Polyethylen in den Polyethylengarnen ist vorzugsweise ein Polyethylen mit einem Molekulargewicht von mindestens 1.000.000 g/mol und noch bevorzugter mit einem Molekulargewicht Mw von 2.000.000 bis 6.000.000 g/mol. Polyethylen mit einem solchen Molekulargewicht wird allgemein als ultrahochmolekulares Polyethylen (UHMWPE) bezeichnet. UHMWPE-Garne sind besonders vorteilhaft, da sie bei einer Prüfung nach ISO 2062 eine typische hohe Zugfestigkeit von z. B. 528 N bis 636 N pro Einzelgarn (bei einer linearen Dichte von 1760 dtex) aufweisen können. Dementsprechend werden UHMWPE-Garne als (verzwirnter) Garn in Längsrichtung LR, insbesondere Kettenrichtung, des Endlosgurtes 10 verwendet.

Fig. 1 bis 3 zeigen einen Endlosgurt 10 nach einem bevorzugten erfindungsgemäßen Ausführungsbeispiel. Fig. 1 zeigt konkret eine Verbindungsstelle 14 des Endlosgurtes 10, an der zwei Längsenden 13 miteinander verbunden sind, um den Endlosgurt 10 schlussendlich als endlos, d.h. ohne freies Längsende, in seiner Längsrichtung LR durchgängig auszugestalten.

Die beiden Längsenden 13 des Endlosgurtes 10 sind an einer Verbindungsstelle 14 durch eine Fingerverbindung 15 miteinander verbunden. Wie in Fig. 1 gut erkennbar ist, weist das Gewebezugträger 12 an den beiden Längsenden 13 jeweils eine Zickzackkontur 17 mit Fingerelementen 18 auf, die an der Verbindungsstelle 14 zur Bildung der Fingerverbindung 15 ineinander eingreifen. Die Zickzackkonturen 17 sind einander in Längsrichtung LR gegenüberliegend und greifen ineinander ein. Mit anderen Worten sind die beiden Längsenden 13 des Gurtes 10 durch die Zickzackkonturen 17 miteinander verzahnt. In Fig. 1 sind zur besseren Veranschaulichung die Fingerelemente 18 der Zickzackkonturen 17 aufgefächert dargestellt. Im fertig verbundenen Zustand befinden sich die Fingerelemente 18 in einer gemeinsamen Ebene.

In der Fig. 2 ist eine Explosionsdarstellung der Verbindungsstelle 14 des Endlosgurtes 10 gezeigt. Es ist erkennbar, dass die beiden Deckplatten 11 im Bereich der Verbindungsstelle 14 freigeschnitten sind. Mit anderen Worten ist die Verbindungsstelle 14, an dem die beiden Längsenden 13 durch Spleißen miteinander verbunden sind, derart ausgenommen, dass das Gewebezugträger 12 freiliegt. Dies ist zur Herstellung der Fingerverbindung 15 der beiden Zickzackkonturen 17 der Längsenden 13 erforderlich, um die Zugänglichkeit zum Gewebezugträger 12 zu ermöglichen.

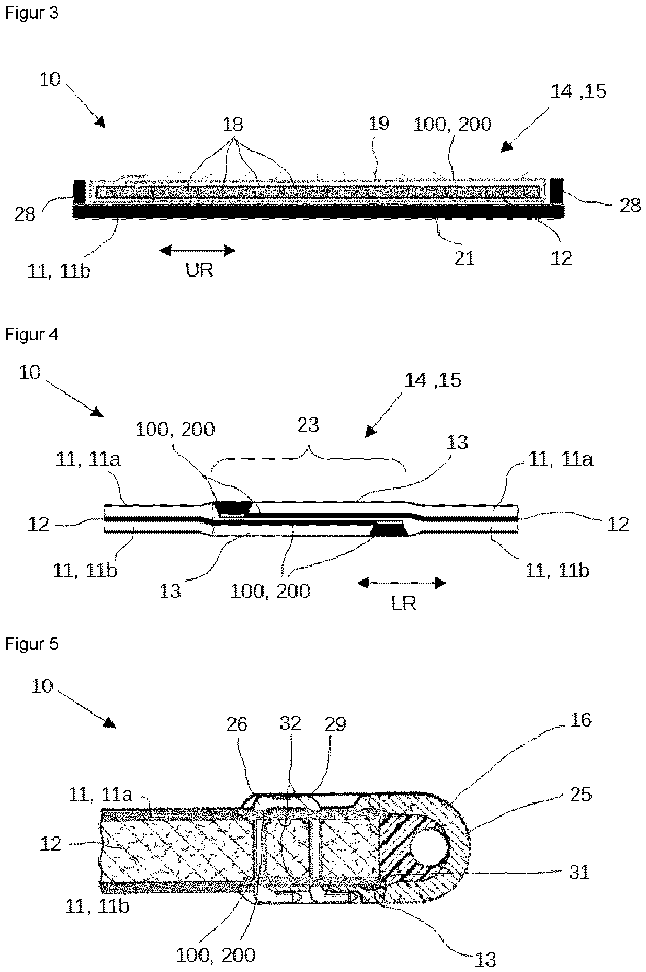

Fig. 2 und 3 zeigen neben den Hauptkomponenten des Endlosgurtes 10 ein Klebstoffband 19, insbesondere einen Klebstoffstreifen oder eine Klebstofffolie, das über die volle Länge L der Fingerelemente 18 der ineinandergreifenden Zickzackkonturen 17 vorgesehen ist. In Längsrichtung LR gesehen, ist neben dem Klebstoffband 19 jeweils ein weiteres Klebstoffband 22 vorgesehen, dass auf der Seite der ersten Deckplatte 11a und auf der Seite der zweiten Deckplatte 11b auf dem Gewebezugträger 12 angeordnet ist.

Wesentlich ist, dass das Klebstoffband 19, welches auf den Fingerelementen 18 angeordnet ist, das Gewebezugträger 12 in Umfangsrichtung UR vollständig umlaufend angeordnet ist. Dies ist im Besonderen in Fig. 3 zu sehen. Mit anderen Worten ummantelt das Klebstoffband 19 das Gewebezugträger 12 im Bereich der Fingerverbindung 15 derart, dass die ineinandergreifenden Fingerelemente 18 der Zickzackkonturen 17 außenumfänglich verstärkt sind.

Wie in Fig. 3 des Weiteren gezeigt ist, weist das Klebstoffband 19 freie Enden auf, die in Umfangsrichtung UR überlappen. Es hat sich herausgestellt, dass eine Überlappung der freien Enden des Klebstoffbandes 19 von bis 50 mm ausreichend ist, um einen festen Verbund herzustellen. In Fig. 3 ist die erste Deckplatte 11a zu Darstellungszwecken ausgeblendet.

In Fig. 2 ist ferner gezeigt, dass insgesamt zwei Abdeckelemente 21 aus einem thermoplastischem Elastomer (TPE), bevorzugt aus thermoplastischem Polyurethan (TPU) vorgesehen sind. Je eines der Abdeckelemente 21 ist auf einer Seite des Gewebezugträgers 12 angeordnet, um die Verbindungsstelle 14 zu verschließen. Im zusammengesetzten Zustand ist das Klebstoffband 19 einerseits mit dem Gewebezugträger 12, insbesondere den ineinandergreifenden Fingerelementen 18, und andererseits mit den beiden Abdeckelementen 21 verklebt.

Das Klebstoffband 19 also nicht nur zur Verstärkung der Fingerverbindung 15, sondern auch zur Verklebung der Abdeckelemente 21 mit dem Gewebezugträger 12. Im zusammengesetzten Zustand schließen die Abdeckelemente 21 mit der jeweiligen Deckplatte 11 bündig ab. An dieser Stelle wird darauf hingewiesen, dass es zu einer Dickenerweiterung von bis zu 0,5 mm im Vergleich zu einer Dicke der an die Verbindungsstelle 14 angrenzenden Gurtabschnitte des Endlosgurtes 10 kommen kann.

Um die Fingerverbindung15 herzustellen, wird zwischen den Fingerelementen 18 der Zickzackkonturen 17 der beiden Längsenden 13 ein Klebstoffmaterial, bspw. Als Montagekleber, eingebracht. So sind die ineinandergreifenden Fingerelemente 18 zusätzlich untereinander verklebt.

Wie bereits erwähnt, sind die weiteren Klebstoffbänder 22 vorgesehen, die ebenso zur Verklebung der Abdeckelemente 21 mit dem Gewebezugträger 12 dienen. Die Abdeckelemente 21 bilden Deckel für die Verbindungsstelle 14 des Endlosgurtes 10. Die Abdeckelemente 21 sind aus dem gleichen Material wie die Deckplatten 11 gebildet. Fig. 3 zeigt, dass zwischen den Deckplatten 11 an jeweils einer Querseite des Gurtes 10 ein Steg 28 als Seitenwand mit den Deckplatten 11 verbunden ist. Der Steg 28 weist ebenso, wie die Abdeckelemente 21, dasselbe Material wie die Deckplatten 11 auf.

Um die Verbindungsstelle 14 zu finalisieren, wird diese in einer Presse angeordnet und zur Vulkanisierung verpresst. Die Temperatur ist dabei so gewählt, dass das Gewebezugträger 12, insbesondere die Poyolefingarne, nicht rekristallisiert bzw. rekristallisieren.

Das Klebstoffband 19 umfasst ein Schmelzklebstoffmaterial 100 aus thermoplastischem Elastomer (TPE), vorzugsweise aus thermoplastischem Polyurethan (TPU). Zusätzlich oder alternativ umfasst das Klebstoffband 19 ein Einkomponenten-Klebstoffmaterial 200 aus Polyurethan (1K-PU). Dies trifft vorzugsweise auch für die Klebstoffbänder 22 bzw. das weitere Klebstoffmaterial zu, welches zwischen den Fingerelementen 18 eingebracht ist.

Der Einfachheit halber wird im Folgenden das verwendete Schmelzklebstoffmaterial als TPE-Schmelzklebstoffmaterial 100 und das Einkomponenten-Klebstoffmaterial als 1K-PU-Klebstoffmaterial 200 bezeichnet.

Fig. 4 zeigt eine nicht lösbare Verbindung 15 einer Verbindungsstelle 14 zweier Längsenden 13 eines Endlosgurtes 10 nach einem weiteren erfindungsgemäßen Ausführungsbeispiel. Die nicht lösbare Verbindung 15 gemäß Fig. 4 unterscheidet sich von der nicht lösbare Verbindung 15 gemäß Fig. 1 bis 3 darin, dass keine Fingerelemente von Zickzackkonturen ineinandergreifen, sondern das Spleißen durch eine Überlappung erfolgt.

Konkret ist die in Fig. 4 gezeigte eine nicht lösbare Überlappungsverbindung 15, welche die beiden Längsenden 13 des Endlosgurtes 10 miteinander verbindet. Die Verbindungsstelle 14 umfasst einen Überlappungsabschnitt 23, in dem beide Längsenden 13 in Längsrichtung LR des Endlosgurts 10 überlappen. Im Überlappungsabschnitt 23 ist TPE-Schmelzklebstoffmaterial 100 und/oder das 1K-PU-Klebstoffmaterial 200 zwischen den einander gegenüberliegenden Deckplatten 11 angeordnet derart, dass die beiden Deckplatten 11 stoffschlüssig verbindet. Wesentlich ist, dass kein Kautschukklebstoffmaterial, wie in der DIN 22102-3 beschrieben verwendet wird.

Konkret sind, wie in Fig. 4 gezeigt, die beiden ersten Deckplatten 11a und die beiden zweiten Deckplatten 11b durch das TPE-Schmelzklebstoffmaterial 100 und/oder das 1K-PU-Klebstoffmaterial 200 miteinander verklebt.

Die Längsenden 13 weisen im Überlappungsabschnitt 23 jeweils eine Materialabtragung 24 an den einander gegenüberliegenden Deckplatten 11 auf, in die das TPE-Schmelzklebstoffmaterial 100 und/oder das 1K-PU-Klebstoffmaterial 200 eingebettet ist. Das TPE-Schmelzklebstoffmaterial 100 und/oder 1K-PU-Klebstoffmaterial 200 ist vorzugsweise über die gesamte Breite des Endlosgurtes 10 vorgesehen.

Im vorliegenden Fall umfasst die erste Deckplatt 11a des einen Längsendens 13 und die zweite Deckplatte 11b des anderen Längsendens 13 die Materialabtragung 24. Die beiden Längsenden 13 sitzen über die Materialabtragungen 24 einander ein. Mit anderen Worten sind die beiden Längsenden 13 durch die Materialabtragungen 24 in Dickenrichtung versenkt, sodass sich eine möglichst geringe Dicke der Verbindungsstelle 14 ergibt.

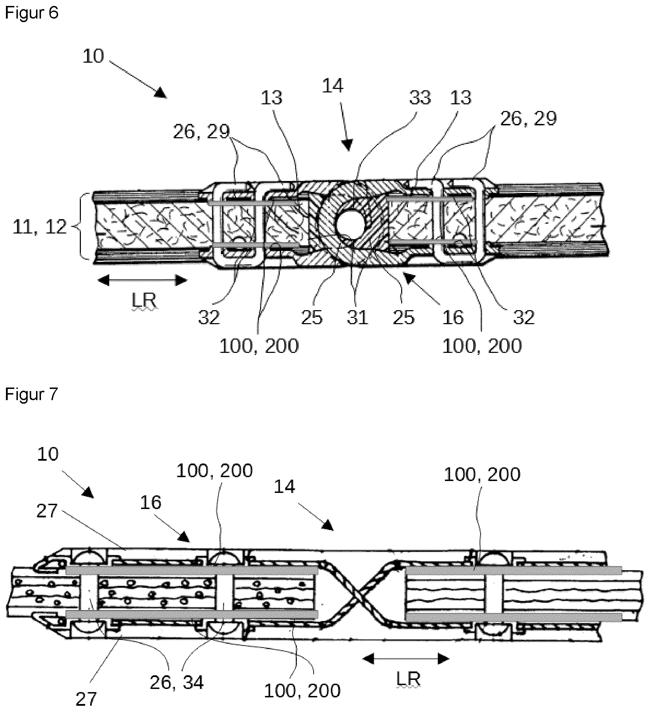

Die Fig. 5 und 6 zeigen eine Hakenverbindungseinrichtung, wie sie aus der US 4653156 A bekannt ist, wobei Fig. 5 der Fig. 2 und Fig. 6 der Fig. 3 der US 4653156 A entspricht. In den Figuren 5 und 6 sind zur Verdeutlichung zusätzlich die Bereiche graphisch hervorgehoben, in denen gemäß der Erfindung Schmelzklebstoffmaterial vorhanden sein soll.

Mit Hilfe der Hakenverbindungseinrichtung 16 werden zwei Längsenden 13 eines Endlosgurtes 10 verbunden. Wie in Fig. 6 erkennbar ist, verbindet die Hakenverbindungseinrichtung 16 die beiden Längsenden 13 an einer Verbindungsstelle 14 des Endlosgurtes 10 mechanisch. Fig. 5 stellt hierbei eines der beiden Längsenden 13 dar, an dem ein Kopplungselement 25 angeordnet ist. Die folgende Beschreibung gilt auch für das andere der beiden Längsenden 13, das ebenso ein Kopplungselement 25 umfasst.

Fig. 5 zeigt, dass das Kopplungselement 25 in dem Längsende 13 des Endlosgurtes 10 mechanisch ist. Die Verankerung 26 ist durch Befestigungsmittel 29, bspw. Bolzen, Platten oder dergleichen, aus Metall gebildet. Die Befestigungsmittel 29 durchdringen die Deckplatten 11 und das Gewebezugträger 12, insbesondere quer zur Längsrichtung LR, d.h. in einer Dickenrichtung des Endlosgurtes 10, und verankern das Kopplungselement 25 so an dem Längsende 13. In Fig. 5 ist erkennbar, dass das Kopplungselement 25 als Klammer ausgebildet ist, welche auf eine Stirnseite 31 des Längsendes 13 aufgeschoben ist. Die Verankerung 26 durch die Befestigungsmittel 29 erfolgt in einem Abstand zur Stirnseite 31 des Längsendes 13.

Das Kopplungselement 25 weist je Deckplatte 11 eine Kontaktfläche 32 auf, die der Deckplatte 11 zu gewandt ist. Zwischen der Kontaktfläche 32 und der Deckplatte 11 ist ein TPE-Schmelzklebstoffmaterial 100 und/oder 1K-PU-Klebstoffmaterial 200 eingebracht, welches das Kopplungselement 25 und die Deckplatt 11 miteinander verklebt. Dies erfolgt zusätzlich zur Verankerung 26 des Kopplungselements 25 an dem Längsende 13. Das TPE-Schmelzklebstoffmaterial 100 und/oder 1K-PU-Klebstoffmaterial 200 ist vorzugsweise über die gesamte Breite des Endlosgurtes 10 vorgesehen. In Fig. 5 ist ferner zu sehen, dass Schichten aus dem TPE-Schmelzklebstoffmaterial 100 und/oder 1K-PU-Klebstoffmaterial 200 direkt im Bereich der Befestigungsmittel 29 angeordnet sind.

Aus Fig. 6 geht hervor, dass die beiden gegenüberliegenden Längsenden 13 des Endlosgurtes 10 miteinander verbunden sind, indem zwei gegenüberliegende Kopplungselemente 25 der beiden Längsenden 13 mechanisch verbunden sind. Dazu können diese formschlüssig, durch Ineinandereingreifen, verbunden sein. Gemäß Fig. 6 weist aber die Verbindungseinrichtung 16 ein Arretierelement 33, insbesondere einen Arretierstift, auf, das die beiden Kopplungselemente 25 miteinander arretiert. Bevorzugt umfasst die Verbindungseinrichtung 16 eine Vielzahl der vorstehend beschriebenen Kopplungselemente 25, die quer zur Längsrichtung LR entlang der Längsenden 13 nebeneinander angeordnet sind.

Als Kopplungselemente 25 können Haken, insbesondere Drahthaken oder Flachhaken, Spiralverbinder und/oder Plattenverbinder oder dergleichen zum Einsatz kommen.

Fig. 7 zeigt eine mechanische Schraubverbindungseinrichtung 16 zur Verbindung zweier Längsenden 13 eines Endlosgurtes 10 nach einem weiteren erfindungsgemäßen Ausführungsbeispiel, wie sie, ohne die Modifikation mit einem Schmelzklebstoffmaterial, in Figur 2 der EP 0674754 B1 angegeben ist. Die Verbindungseinrichtung 16 weist zwei Befestigungselemente 27 auf, die an den Deckplatten 11 einander gegenüber angeordnet und miteinander derart vielfach verschraubt sind, dass die Längsenden 13 zwischen den Befestigungselementen 27 fixiert sind. Konkret ragen die Längsenden 13 des Endlosgurtes 10 in einen Zwischenraum, der zwischen den beiden Befestigungselementen 27 gebildet ist, einander gegenüberliegend ein. Die Verbindungseinrichtung 16 wirkt als ein flexibles Zwischenstück, das in Längsrichtung LR zwischen den Längsenden 13 liegt und diese überlappt. In dem überlappenden Bereich erfolgt die Verschraubung einerseits der Befestigungselemente 27 miteinander und andererseits der Befestigungselemente 27 mit den Deckplatten 11 und dem Gewebezugträger 12.

Die Befestigungselemente 27 sind mattenförmig ausgebildet. Die Befestigungselemente 27 können aus demselben Material wie die Deckplatten 11 bestehen. Gemäß Fig. 7 sind die Befestigungselemente 27 flexibel ausgebildet.

In Fig. 7 ist erkennbar, dass zwischen den Befestigungselementen 27 und den Deckschickten 11 eine Schicht aus TPE-Schmelzklebstoffmaterial 100 und/oder 1K-PU-Klebstoffmaterial 200 eingebracht ist, die die Befestigungselemente 27 mit den Deckplatten 11 verklebt. Dies erfolgt zusätzlich zu der Verschraubung. Die Schrauben 34 der Verschraubung durchdringen die Schicht aus TPE-Schmelzklebstoffmaterial 100 und/oder 1K-PU-Klebstoffmaterial 200. Bevorzugt ist das TPE-Schmelzklebstoffmaterial 100 und/oder 1K-PU-Klebstoffmaterial 200 über die gesamte Breite des Endlosgurtes 10 zwischen den Befestigungselementen 27 und den Deckplatten 11 angeordnet. Folglich erstrecken sich die Befestigungselemente 27 über die gesamte Breite des Endlosgurtes 10. Die Verschraubung der Befestigungselemente 27 erfolgt ebenso auf gesamter Breite des Endlosgurtes 10. Daraus resultiert eine besonders stabile und zugfeste Verbindungsstelle.

Abschließend wird darauf hingewiesen, dass die vorstehend beschriebenen Ausführungsbeispiele des Endlosgurtes 10 nicht auf deren Merkmale eingeschränkt sind. Vielmehr sind die Merkmale der Ausführungsbeispiele des Endlosgurtes frei untereinander kombinierbar.

### Bezugszeichenliste

- 10: Endlosgurt
- 11: Deckplatten
- 11a: erste Deckplatte
- 11b: zweite Deckplatte
- 12: Gewebezugträger
- 13: Längsenden
- 14: Verbindungsstelle
- 15: nicht-lösbare (permanente) Verbindung, z.B. Fingerverbindung oder Überlappungsverbindung
- 16: Verbindungseinrichtung
- 17: Zickzackkontur
- 18: Fingerelemente
- 19: Klebstoffband
- 21: Abdeckelement
- 22: weitere Klebstoffband
- 23: Überlappungsabschnitt
- 24: Materialabtragung
- 25: Kopplungselement
- 26: Verankerung
- 27: Befestigungselemente
- 28: Steg
- 29: Befestigungsmittel
- 31: Stirnseite des Längsendes
- 32: Kontaktfläche
- 33: Arretierelement
- 34: Schrauben

- 100: Schmelzklebstoffmaterial
- 200: Einkomponenten-Klebstoffmaterial
- UR: Umfangsrichtung
- LR: Längsrichtung
- L: Länge der Fingerelemente

## Patentansprüche

1. Endlosgurt (10) mit wenigstens zwei Deckplatten (11) aus thermoplastischem Elastomer und wenigstens einem zwischen den beiden Deckplatten (11) angeordneten Gewebezugträger (12), der ein oder mehrere Polyolefingarne umfasst, wobei der Endlosgurt (10) wenigstens zwei Längsenden (13) aufweist, die an einer Verbindungsstelle (14) durch eine nicht lösbare Verbindung (15) und/oder durch wenigstens eine an den Längsenden (13) mechanische Verbindungseinrichtung (16) miteinander verbunden sind, wobei die Verbindungsstelle (14) wenigstens ein Schmelzklebstoffmaterial aus thermoplastischem Elastomer und/oder Einkomponenten-Klebstoffmaterial aus Polyurethan aufweist, das die nicht lösbare Verbindung (15) der beiden Längsenden (13) verstärkt und/oder die mechanische Verbindungseinrichtung (16) zusätzlich mit den Längsenden (13) stoffschlüssig verbindet.

2. Endlosgurt (10) nach Anspruch 1,
**dadurch gekennzeichnet, dass**
das Schmelzklebstoffmaterial ein thermoplastischer Polyurethan Schmelzklebstoff ist.

3. Endlosgurt (10) nach Anspruch 1 oder 2,
**dadurch gekennzeichnet, dass**
der Gewebezugträger (12) an den beiden Längsenden (13) jeweils eine Zickzackkontur (17) mit Fingerelementen (18) aufweist, die an der Verbindungsstelle (14) zur Bildung der nicht lösbaren Verbindung (15) ineinander eingreifen, wobei die Zickzackkonturen (17) in Umfangsrichtung des Endlosgurts (10) zumindest mit dem Schmelzklebstoffmaterial ummantelt sind.

4. Endlosgurt (10) nach Anspruch 3,
**dadurch gekennzeichnet, dass**
das Schmelzklebstoffmaterial als Klebstoffband (19) auf die Zickzackkonturen (17) des Gewebezugträgers (12) aufgebracht ist, wobei die Enden des Klebstoffbandes sich in Umfangsrichtung des Endlosgurts (10), insbesondere bis zu 50 mm, überlappen.

5. Endlosgurt (10) nach Anspruch 3 oder 4,
**dadurch gekennzeichnet, dass**
das Schmelzklebstoffmaterial die Zickzackkonturen (17) des Gewebezugträgers (12) in Längsrichtung des Endlosgurts (10) zumindest abschnittsweise, insbesondere vorzugsweise vollständig, bedeckt.

6. Endlosgurt (10) nach einem der Ansprüche 3 bis 5,
**dadurch gekennzeichnet, dass**
wenigstens ein weiteres Klebstoffmaterial zwischen den Fingerelementen (18) der Zickzackkonturen (17) des Gewebezugträgers (12) eingebracht ist, um Fingerelemente (18) der Zickzackkonturen (17) miteinander zu verkleben.

7. Endlosgurt (10) nach einem der vorhergehenden Ansprüche,
**dadurch gekennzeichnet, dass**
die zur Bildung der nicht lösbaren Verbindung (15) freigeschnittene Verbindungsstelle (14) durch wenigstens ein Abdeckelement (21) aus thermoplastischem Elastomer, insbesondere aus thermoplastischem Polyurethan (TPU), abgedeckt und durch das Schmelzklebstoffmaterial mit dem Gewebezugträger (12) stoffschlüssig verbunden ist.

8. Endlosgurt (10) nach einem der Ansprüche 3 bis 7,
**dadurch gekennzeichnet, dass**
wenigstens ein weiteres Klebstoffband (22) in Längsrichtung an den Zickzackkonturen (17) beidseitig angeordnet ist, um das/ein Abdeckelement (21) mit dem Gewebezugträger (12) zu verkleben.

9. Endlosgurt (10) nach Anspruch 7 oder 8,
**dadurch gekennzeichnet, dass**
das Abdeckelement (21) mit der ersten bzw. der zweiten Deckplatte (11) im Wesentlichen außenbündig abschließt.

10. Endlosgurt (10) nach einem der vorhergehenden Ansprüche, insbesondere nach Anspruch 1 oder 2,
**dadurch gekennzeichnet, dass**
die Verbindungsstelle (14) wenigstens einen Überlappungsabschnitt (23) umfasst, in dem beide Längsenden (13) in Längsrichtung des Endlosgurts (10) überlappen, wobei in dem Überlappungsabschnitt (23) das Schmelzklebstoffmaterial und/oder das Einkomponenten-Klebstoffmaterial zwischen den einander gegenüberliegenden Deckplatten (11) angeordnet ist und diese stoffschlüssig verbindet.

11. Endlosgurt (10) nach Anspruch 10,
**dadurch gekennzeichnet, dass**
die Längsenden (13) im Überlappungsabschnitt (23) jeweils eine Materialabtragung (24) an den einander gegenüberliegenden Deckplatten (11) umfassen, in die das Schmelzklebstoffmaterial und/oder das Einkomponenten-Klebstoffmaterial eingebettet ist.

12. Endlosgurt (10) nach einem der vorhergehenden Ansprüche, insbesondere nach Anspruch 1 oder 2,
**dadurch gekennzeichnet, dass**
die mechanische Verbindungseinrichtung (16) je Längsende (13) des Endlosgurts (10) wenigstens ein Kopplungselement (25) umfasst, wobei die Kopplungselemente (25) mechanisch miteinander verbunden sind, wobei das Schmelzklebstoffmaterial und/oder Einkomponenten-Klebstoffmaterial die Kopplungselemente (25) mit der ersten und/oder zweiten Deckplatte (11) zusätzlich zur Verankerung (26) stoffschlüssig verbindet.

13. Endlosgurt (10) nach einem der vorhergehenden Ansprüche, insbesondere nach Anspruch 1 oder 2,
**dadurch gekennzeichnet, dass**
die mechanische Verbindungseinrichtung (16) wenigstens zwei Befestigungselemente (27), insbesondere Matten, umfasst, die an den Deckplatten (11) einander gegenüber angeordnet und miteinander derart vielfach verschraubt sind, dass die Längsenden (13) zwischen den Befestigungselementen (27) fixiert sind.

14. Endlosgurt (10) nach Anspruch 13,
**dadurch gekennzeichnet, dass**
das Schmelzklebstoffmaterial und/oder Einkomponenten-Klebstoffmaterial zwischen den Befestigungselementen (27) und den Deckplatten (11) angeordnet ist und diese miteinander stoffschlüssig verbindet.

15. Endlosgurt (10) nach einem der vorhergehenden Ansprüche,
**dadurch gekennzeichnet, dass**
der Endlosgurt (10) ein Förderband, ein Zahnriemen oder ein Antriebsriemen ist.
